## Europäisches Patentamt
## European Patent Office
## Office européen des brevets

(19)

(11) Numéro de publication: **0 100 709**
**B1**

(12) # FASCICULE DE BREVET EUROPEEN

(45) Date de publication du fascicule du brevet:
**08.01.86**

(51) Int. Cl.⁴: **C 01 F 17/00**

(21) Numéro de dépôt: **83401455.7**

(22) Date de dépôt: **13.07.83**

(54) **Sulfate cérique très soluble.**

(30) Priorité: **26.07.82 FR 8212970**

(43) Date de publication de la demande:
**15.02.84 Bulletin 84/7**

(45) Mention de la délivrance du brevet:
**08.01.86 Bulletin 86/2**

(84) Etats contractants désignés:
**AT BE CH DE FR GB IT LI NL SE**

(56) Documents cités:
**US - A - 4 313 804**

**GMELIN HANDBUCH DER ANORGANISCHEN CHEMIE,
no. 39, 1981, pages 116-124, Springer-Verlag, Berlin, DE.
CHEMICAL ABSTRACTS, vol. 58, no. 1, 7 janvier 1963,
résumé 68h, 69a, Columbus, Ohio, USA I.I. ANGELOV et
al.: "Equilibrium in the system Ce(SO4)2-H2SO4-H2O"**

(73) Titulaire: **RHONE-POULENC SPECIALITES CHIMIQUES,
"Les Miroirs" 18, Avenue d'Alsace, F-92400 Courbevoie
(FR)**

(72) Inventeur: **Anglerot, Didier, 10 Allée des Noisetiers,
F-64000 Pau (FR)**

(74) Mandataire: **Dutruc-Rosset, Marie-Claude et al, RHONE
POULENC RECHERCHES Service Brevets Chimie et
Polymères 25, Quai Paul Doumer, F-92408 Courbevoie
Cedex (FR)**

ACTORUM AG

## Description

La présente invention concerne de nouveaux sulfates cériques très solubles, leur procédé de fabrication et leurs applications.

Le sulfate cérique existe sous deux formes: un sel anhydre $Ce(SO_4)_2$ et un sel tétrahydraté $Ce(SO_4)_2, 4H_2O$.

On connaît par ailleurs (G. Trofimov et J. Beloskoskov. Zh. Neorg. Khim 13 (1), 260-266 (1968) (M.P.) l'existence d'un sulfate cérique acide de formule $Ce(SO_4)_2, H_2SO_4$.

Il existe des composés du cérium très solubles dans l'eau, c'est-à-dire qui peuvent former des solutions aqueuses de cérium contenant au moins 1 mol/l de cérium. Ces solutions sont constituées · généralement de nitrate cérique ou de nitrate cériammonique. La présence de nitrate s'avère toutefois gênante lorsque ces produits sont utilisés notamment en catalyse ou en synthèse organique, c'est la raison pour laquelle le sulfate cérique peut avantageusement remplacer ces produits. Toutefois, ce sel présente l'inconvénient d'être beaucoup moins soluble dans l'eau que les nitrates.

La présente invention a pour but de fournir un nouveau sulfate cérique dont la solubilité dans l'eau est nettement supérieure à celle des sulfates cériques existants et du même ordre que les composés à base de nitrate.

Les différents sulfates cériques qui existent sur le marché présentent une solubilité dans l'eau inférieure à 140 g de cérium par litre de solution.

La présente invention concerne un sulfate cérique très soluble dans l'eau, caractérisé en ce que sa solubilité dans l'eau mesurée à température ambiante et exprimée en g/l de cérium à l'état tétravalent est comprise entre 150 et 385 g/l et de préférence entre 180 et 385 g/l.

Le sulfate cérique de l'invention permet d'obtenir des solutions aqueuses qui restent fluides et peuvent être manipulées sans difficulté tout en étant très stables au cours du temps.

Le sulfate cérique selon l'invention répond à la formule générale brute $Ce(SO_4)_2, xH_2SO_4, nH_2O$ (I) dans laquelle x et n sont supérieurs ou égaux à 0 et inférieurs ou égaux à 1.

Le sulfate cérique très soluble selon l'invention présente un diagramme de rayons X dans lequel on peut déterminer la présence d'une phase $Ce(SO_4)_2$ anhydre. Ainsi, sans limiter la présente invention à la théorie, on peut penser que le sulfate cérique de l'invention est notamment constitué d'une phase $Ce(SO_4)_2$, dont le diagramme de rayons X est celui donné dans la fiche ASTM 22546, sur laquelle est adsorbé de l'acide sulfurique (anions sulfates) et éventuellement de l'eau.

La présente invention concerne également le procédé de fabrication de ce sulfate cérique très soluble qui est caractérisé en ce qu'il consiste à effectuer au moins un traitement thermique à une température comprise entre 80 et 350°C d'un sulfate cérique hydraté de formule $Ce(SO_4)_2, yH_2SO_4, zH_2O$ (II) dans laquelle y est supérieur à 0 et inférieur ou égal à 1,5 et z est supérieur ou égal à 2.

Plus précisément, ce procédé de fabrication est caractérisé en ce qu'il comporte les étapes suivantes:

a) dans une première étape, on prépare le sulfate cérique de formule $Ce(SO_4)_2, yH_2SO_4, zH_2O$ (II) dans laquelle y est supérieur à 0 et inférieur ou égal à 1,5 et z est supérieur ou égal à 2, par réaction entre l'hydrate cérique et l'acide sulfurique ou par électrolyse du sulfate céreux ou par réaction entre un sel cérique et l'acide sulfurique,

b) dans une deuxième étape, le sulfate cérique obtenu dans la première étape, éventuellement après filtration, est traité thermiquement à une température comprise entre 80 et 350°C.

Selon la première étape du procédé de l'invention, on prépare le sulfate cérique de formule $Ce(SO_4)_2, yH_2SO_4, zH_2O$ (II) dans laquelle y est compris entre 0 et 1,5 et z est supérieur ou égal à 2.

Les valeurs préférentielles de y et z sont les suivantes: y est supérieur ou égal à 0,2 et inférieur ou égal à 0,7 et z est supérieur ou égal à 2.

Ce sulfate cérique peut être préparé par réaction entre l'hydrate cérique et l'acide sulfurique ou par électrolyse du sulfate céreux ou bien par réaction entre un sel cérique (par exemple le nitrate cérique) et l'acide sulfurique; on opère de préférence par réaction entre l'hydrate cérique ($CeO_2, 2H_2O$) et l'acide sulfurique.

Dans le mode de mise en œuvre préféré de la première étape du procédé de l'invention, l'hydrate cérique utilisé est préalablement séché à une température comprise entre environ 50 et 140°C et de préférence entre 100 et 120°C. L'acide sulfurique mis en œuvre présente de préférence une concentration inférieure à 20N et plus particulièrement comprise entre 15 et 18N. La quantité d'acide sulfurique mise en œuvre correspond de préférence à un excès de 100 à 200% par rapport à la stœchiométrie. La réaction entre l'hydrate cérique séché et l'acide sulfurique est de préférence conduite à une température inférieure à 100°C et plus particulièrement comprise entre 60 et 100°C, la température de réaction inférieure à 100°C vise à éviter la formation de sels basiques du type $CeOSO_4$ dans le milieu réactionnel. La durée de la réaction n'est pas critique et peut varier entre 10 min et 3 h. On obtient ainsi un sulfate cérique hydraté de formule $Ce(SO_4)_2, yH_2SO_4, zH_2O$ (II) dans laquelle y est compris entre 0 et 1,5 et z supérieur ou égal à 2, z représentant l'eau libre et l'eau liée du sulfate cérique obtenu dans cette première étape.

Avant d'opérer le traitement thermique, on procède à une étape de filtration éventuelle du sulfate cérique hydraté obtenu dans la première étape. On filtre la masse réactionnelle qui est à une température comprise entre la température ambiante et 95°C et de préférence entre 40 et 60°C.

Selon la deuxième étape du procédé de l'invention, on traite thermiquement le sulfate cérique hydraté de formule (II) à une température comprise entre 80 et 350°C. La durée du traitement thermique varie de 6 à 48 h.

Sans limiter la présente invention à la théorie, on peut penser que ce traitement thermique conduit sur le plan de l'évolution cristallographique à un changement de phase entre le produit obtenu selon la première étape dont le spectre de rayons X révèle notamment l'existence d'une phase isotype avec $U(SO_4)_2$, $4H_2O$ et le sulfate cérique désiré dont le spectre de rayons X révèle notamment l'existence de la phase $Ce(SO_4)_2$ anhydre. On opère de préférence ce traitement thermique à une température comprise entre 110 et 200°C pendant un temps d'environ 10 à 24 h.

Le sulfate cérique obtenu présente une très grande solubilité dans l'eau qui est comprise entre 150 et 285 g/l exprimé en cérium à l'état tétravalent et de préférence 180 à 285 g/l.

Une variante préférée du procédé de l'invention pour préparer un sulfate cérique de formule $Ce(SO_4)_2$, $xH_2SO_4$, $nH_2O$ (I) dans laquelle x et n sont supérieurs ou égaux à 0 et inférieurs à 0,1 consiste à soumettre le sulfate cérique hydraté de formule (II) à un premier traitement thermique à une température comprise entre 80 et 130°C pendant une durée variable de 10 à 48 h qui conduit ainsi à un sulfate cérique de formule $Ce(SO_4)_2$, $x'H_2SO_4$, $n'H_2O$ (III) dans laquelle x' est supérieur ou égal à 0,2 et inférieur ou égal à 0,7 et n' est inférieur ou égal à 1 puis à soumettre le sulfate cérique de formule (III) à un deuxième traitement thermique à une température comprise entre 250 et 350°C pendant 4 à 24 h.

Le sulfate obtenu selon cette variante du procédé de l'invention présente une solubilité dans l'eau qui est supérieure puisque généralement plus grande qu'environ 300 g/l.

Les sulfates cériques très solubles de l'invention peuvent être utilisés pour des applications très diverses et en particulier pour la fabrication de catalyseurs pour diverses réactions chimiques, dans la préparation des colles, pour la préparation de sesquisulfure de cérium, pour des préparations médicamenteuses, pour l'obtention de mousses de polyuréthanne poreuses, pour la préparation de couches de chrome à faible pouvoir réflecteur, pour la préparation de résistors, comme initiateurs pour le greffage de monomères sur divers polymères, dans les réactions d'oxydoréduction par exemple pour l'obtention d'oxygène en présence de lumière à partir d'eau, pour la production d'hydrogène à partir d'eau avec l'énergie solaire, dans le traitement des pigments au chromate de plomb ou à l'oxyde de titane pour empêcher le brunissement dû au rayonnement ultraviolet, dans la production de siccatifs pour peintures.

Les exemples ci-après illustrent l'invention sans en limiter la portée.

*Exemple 1 :*

Préparation du sulfate cérique de formule $Ce(SO_4)_2$, $1 H_2SO_4$, $0,5 H_2O$.

Dans une première étape, on prépare le sulfate cérique de formule $Ce(SO_4)_2$, $1 H_2SO_4$, $15 H_2O$ par réaction entre 84 g d'hydrate cérique ($CeO_2$, $2H_2O$) et 300 ml d'acide sulfurique de concentration 18N pendant 30 min à 80°C, le précipité obtenu à 80°C est filtré et essoré.

Dans une deuxième étape, le produit essoré est séché à l'étuve à 105°C pendant 48 h. On obtient ainsi un sulfate cérique de formule $Ce(SO_4)_2$, $1H_2SO_4$, $0,5 H_2O$. Par dissolution de ce sulfate cérique dans l'eau, on obtient une solution contenant 280 g/l de cérium IV. Cette solution est suffisamment fluide pour être transvasée et manipulée à température ordinaire, elle présente en outre une remarquable stabilité au cours du temps.

*Exemples 2 à 6 :*

On opère de manière similaire à celle décrite dans l'exemple 1 mais dans les conditions opératoires qui ont été rassemblées dans le tableau I. Les solutions de sulfate cérique obtenues présentent les mêmes qualités que celles qui ont été rappelées à l'exemple 1 ci-dessus.

*Exemples 7 à 9 :*

On réalise les exemples dans les mêmes conditions que celles décrites dans l'exemple 1.

Les exemples 8 et 9 illustrent une variante préférée du procédé de l'invention qui consiste à traiter thermiquement le sulfate cérique obtenu selon l'exemple 7.

Les résultats obtenus sont consignés dans le tableau II.

*(Tableaux en page suivante)*

On note que, pour obtenir une bonne dissolution du sulfate cérique, il y a lieu de mettre en œuvre une quantité d'au moins 250 g/l de sulfate cérique de formule (I).

## Revendications

1. Sulfate cérique répondant à la formule générale brute $Ce(SO_4)_2$, $xH_2SO_4$, $nH_2O$ (I) dans laquelle x et n sont supérieurs ou égaux à 0 et inférieurs ou égaux à 1 et présentant une solubilité dans l'eau exprimée en g/l de cérium à l'état tétravalent comprise entre 150 et 385 g/l et présentant une phase $Ce(SO_4)_2$ anhydre dans son diagramme de rayons X.

2. Sulfate cérique selon la revendication 1, caractérisé en ce que sa solubilité dans l'eau exprimée en g/l de cérium à l'état tétravalent est comprise entre 180 et 385 g/l.

3. Sulfate cérique selon la revendication 1, caractérisé en ce qu'il répond à la formule (I) dans laquelle x et n sont supérieurs ou égaux à 0 et inférieurs à 0,1 et qu'il présente une solubilité dans l'eau exprimée en g/l de cérium à l'état tétravalent d'au moins environ 300 g/l.

4. Procédé de fabrication du sulfate cérique selon l'une des revendications 1 à 3, caractérisé en ce qu'il consiste à effectuer au moins un traitement thermique à une température comprise entre 80 et 350°C d'un sulfate cérique hydraté de formule $Ce(SO_4)_2$, $yH_2SO_4$, $zH_2O$ (II) dans laquelle y est supérieur à 0 et inférieur ou égal à 1,5 et z est supérieur ou égal à 2.

## Tableau I

| Exemple | Produits de départ CeO₂, 2H₂O Température de séchage (°C) | Produits de départ H₂SO₄ Concentration (N) | Réaction Température (°C) | Réaction Rapport SO₄/Ce (moles) | Formule de produit $Ce(SO_4)_2$, $yH_2SO_4$, $zH_2O$ (II) y | z | Traitement thermique Température (°C) | Traitement thermique Durée (h) | Formule $Ce(SO_4)_2$, $xH_2SO_4$, $nH_2O$ (I) x | n | Solubilité dans l'eau en Ce IV (g/l) |
|---|---|---|---|---|---|---|---|---|---|---|---|
| 2 | 110 | 18 | 80 | 6,7 | 0,5 | 15 | 110 | 24 | 0,5 | 1 | 285 |
| 3 | 110 | 18 | 84 | 6,7 | 0,4 | 15 | 200 | 12 | 0,4 | 0,6 | 285 |
| 4 | 110 | 18 | 80 | 6 | 0,5 | 15 | 300 | 72 | 0,05 | 0 | 280 |
| 5 | 110 | 18 | 80 | 6 | 0,3 | 15 | 95 | 168 | 0,3 | 0 | 280 |
| 6 | 110 | 18 | 85 | 6,7 | 1 | 15 | 110 | 24 | 1 | 1 | 280 |

## Tableau II

| Exemple | CeO₂, 2H₂O Température de séchage (°C) | H₂SO₄ Concentration (N) | Réaction Température (°C) | Réaction Rapport SO₄/Ce (moles) | Produit de formule (II)[1] y | z | Traitement thermique Température (°C) | Durée (h) | Produit de formule (III)[2] ou (I)[3] x' ou x | n' ou n | Solubilité dans l'eau en Ce IV (g/l) | Traitement thermique Température (°C) | Durée (h) | Produit de formule (I)[3] x | n | Solubilité dans l'eau en Ce IV (g/l) |
|---|---|---|---|---|---|---|---|---|---|---|---|---|---|---|---|---|
| 7 | 110 | 18 | 80 | 6 | 0,4 | 10 | 110 | 48 | 0,4 | 0,7 | 250 | | | | | |
| 8 | 110 | 18 | 80 | 6 | 0,4 | 10 | 110 | 48 | 0,4 | 0,7 | 250 | 350 | 24 | 0 | 0 | 385 |
| 9 | 110 | 18 | 80 | 6 | 0,4 | 10 | 110 | 48 | 0,4 | 0,7 | 250 | 340 | 6 | 0,05 | 0 | 370 |

[1] Produit de formule (II) = $Ce(SO_4)_2$, $yH_2SO_4$, $zH_2O$
[2] Produit de formule (III) = $Ce(SO_4)_2$, $x'H_2SO_4$, $n'H_2O$
[3] Produit de formule (I) = $Ce(SO_4)_2$, $xH_2SO_4$, $nH_2O$

5. Procédé selon la revendication 4, caractérisé en ce qu'il comporte les étapes suivantes:

a) dans une première étape, on prépare le sulfate cérique de formule $Ce(SO_4)_2, yH_2SO_4, zH_2O$ (II) dans laquelle y est supérieur à 0 et inférieur ou égal à 1,5 et z est supérieur ou égal à 2, par réaction entre l'hydrate cérique et l'acide sulfurique ou par électrolyse du sulfate céreux ou par réaction entre un sel cérique et l'acide sulfurique,

b) dans une deuxième étape, le sulfate cérique obtenu dans la première étape, après éventuellement filtration, est traité thermiquement à une température comprise entre 80 et 350°C.

6. Procédé selon la revendication 4 ou 5, caractérisé en ce que le sulfate cérique hydraté répond à la formule $Ce(SO_4)_2, yH_2SO_4, zH_2O$ (II) dans laquelle y est supérieur ou égal à 0,2 et inférieur ou égal à 0,7 et z est supérieur ou égal à 2.

7. Procédé selon la revendication 5 ou 6, caractérisé en ce que dans la première étape on prépare le sulfate cérique par réaction entre l'hydrate cérique et l'acide sulfurique, l'hydrate cérique ayant été préalablement séché à une température comprise entre environ 50 et 140°C, l'acide sulfurique présentant une concentration inférieure à 20N, la quantité d'acide sulfurique correspondant à un excès de 100 à 200% par rapport à la stœchiométrie, et la réaction contre l'hydrate cérique séché et l'acide sulfurique est conduite à une température inférieure à 100°C.

8. Procédé selon la revendication 7, caractérisé en ce que l'hydrate cérique est séché entre 100 et 120°C.

9. Procédé selon la revendication 7, caractérisé en ce que l'acide sulfurique présente une concentration comprise entre 15 et 18N.

10. Procédé selon la revendication 7, caractérisé en ce que la température de réaction entre l'hydrate cérique séché et l'acide sulfurique est comprise entre 60 et 100°C.

11. Procédé selon l'une des revendications 7 à 10, caractérisé en ce que l'on opère la filtration de la masse réactionnelle contenant le sulfate cérique de formule (II) qui est à une température comprise entre la température ambiante et 95°C.

12. Procédé selon la revendication 11, caractérisé en ce que la température de la masse réactionnelle est comprise entre 40 et 60°C.

13. Procédé selon l'une des revendications 3 à 10, caractérisé en ce que l'on soumet le sulfate hydraté de formule (II) à un traitement thermique à une température comprise entre 110 et 200°C pendant 10 à 24 h.

14. Procédé selon la revendication 4, permettant d'obtenir le sulfate cérique défini dans la revendication 3, caractérisé en ce qu'il consiste à soumettre le sulfate cérique hydraté de formule (II) à un premier traitement thermique à une température comprise entre 80 et 130°C pendant 10 à 48 h conduisant ainsi à un sulfate cérique de formule $Ce(SO_4)_2, x'H_2SO_4, n'H_2O$ (III) dans laquelle x' est supérieur ou égal à 0,2 et inférieur ou égal à 0,7 et n' est inférieur ou égal à 1 ; puis à soumettre le sulfate cérique de formule (III) à un deuxième traitement thermique à une température comprise entre 250 et 350°C pendant 4 à 24 h.

15. Application du sulfate cérique selon l'une des revendications 1 à 3, dans le traitement des pigments au chromate de plomb ou à l'oxyde de titane pour empêcher le brunissement dû au rayonnement ultraviolet.

16. Application du sulfate cérique selon l'une des revendications 1 à 3, dans la production de siccatifs pour peintures.

17. Application du sulfate cérique selon l'une des revendications 1 à 3, dans la fabrication de catalyseurs.

18. Application du sulfate cérique selon l'une des revendications 1 à 3, pour la préparation de sesquisulfures de cérium.

19. Application du sulfate cérique selon l'une des revendications 1 à 3, pour la préparation de résistors.

20. Application du sulfate cérique selon l'une des revendications 1 à 3, comme initiateurs pour le greffage de monomères sur divers polymères.

## Claims

1. Ceric sulphate corresponding to the general overall formula $Ce(SO_4)_2. xH_2SO_4. nH_2O$ (I) in which x and n are greater than or equal to 0 and smaller than or equal to 1 and having a solubility in water, expressed in g/l of cerium in the tetravalent state, of between 150 and 385 g/l and exhibiting an anhydrous $Ce(SO_4)_2$ phase in its x-ray diagram.

2. Ceric sulphate according to Claim 1, characterised in that its solubility in water, expressed in g/l of cerium in the tetravalent state, is between 180 and 385 g/l.

3. Ceric sulphate according to Claim 1, characterised in that it corresponds to the formula (I) in which x and n are greater than or equal to 0 and smaller than 0.1 and in that it has a solubility in water, expressed in g/l of cerium in the tetravalent state, of at least approximately 300 g/l.

4. A process for the preparation of ceric sulphate according to one of Claims 1 to 3, characterised in that it consists in carrying out at least one heat treatment at a temperature of between 80 and 350°C of a ceric sulphate hydrate of formula $Ce(SO_4)_2. yH_2SO_4. zH_2O$ (II) in which y is greater than 0 and smaller than or equal to 1.5 and z is greater than of equal to 2.

5. A process according to Claim 4, characterised in that it comprises the following stages—

(a) In a first stage the ceric sulphate of formula $Ce(SO_4)_2. yH_2SO_4. zH_2O$ (II) in which y is greater than 0 and smaller than or equal to 1.5 and z is greater than or equal to 2 is prepared by a reaction between hydrated ceric oxide and sulphuric acid or by electrolysis of cerous sulphate or by a reaction between a ceric salt and sulphuric acid.

(b) In a second stage, the ceric sulphate obtained in the first stage, after filtration if appropriate, is heat-treated at a temperature of between 80 and 350°C.

6. A process according to Claim 4 or 5, characterised in that the ceric sulphate hydrate corresponds to the formula $Ce(SO_4)_2 \cdot yH_2SO_4 \cdot zH_2O$ (II) in which y is greater than or equal to 0.2 and smaller than or equal to 0.7 and z is greater than or equal to 2.

7. A process according to Claim 5 or 6, characterised in that the first stage ceric sulphate is prepared by a reaction between hydrated ceric oxid and sulphuric acid, hydrated ceric oxid having been dried beforehand at a temperature of between 50 and 140°C, the sulphuric acid having a concentration lower than 20N, the quantity of sulphuric acid corresponding to a 100 to 200% excess relative to the stoichiometry, and the reaction between the dried hydrated ceric oxid and sulphuric acid is carried out at a temperature below 100°C.

8. A process according to Claim 7, characterised in that hydrated ceric oxid is dried between 100 and 120°C.

9. A process according to Claim 7, characterised in that the sulphuric acid has a concentration of between 15 and 18N.

10. A process according to Claim 7, characterised in that the temperature of reaction between the dried hydrated ceric oxid and sulphuric acid is between 60 and 100°C.

11. A process according to one of Claims 7 to 10, characterised in that filtration of the reaction mixture containing ceric sulphate of formula (II) which is at a temperature between ambient temperature and 95°C is carried out.

12. A process according to Claim 11, characterised in that the temperature of the reaction mixture is between 40 and 60°C.

13. A process according to one of Claims 3 to 10, characterised in that the sulphate hydrate of formula (II) is subjected to a heat-treatment at a temperature of between 110 and 200°C for 10 to 24 h.

14. A process according to Claim 4, permitting the ceric sulphate defined in Claim 3 to be obtained, characterised in that it consists in subjecting the ceric sulphate hydrate of formula (II) to a first heat-treatment at a temperature of between 80 and 130°C for 10 to 48 h, thus resulting in a ceric sulphate of formula $Ce(SO_4)_2 \cdot x'H_2SO_4 \cdot n'H_2O$ (III) in which x' is greater than or equal to 0.2 and smaller than or equal to 0.7 and n' is smaller than or equal to 1; then in subjecting the ceric sulphate of formula (III) to a second heat treatment at a temperature of between 250 and 350°C for 4 to 24 h.

15. Application of ceric sulphate according to one of Claims 1 to 3 in the treatment of lead chromate or titanium oxide pigments to prevent the browning due to ultraviolet radiation.

16. Application of ceric sulphate according to one of Claims 1 to 3 in the production of paint driers.

17. Application of ceric sulphate according to one of Claims 1 to 3 in the manufacture of catalysts.

18. Application of ceric sulphate according to one of Claims 1 to 3 for the preparation of cerium sesquisulphides.

19. Application of ceric sulphate according to one of Claims 1 to 3 for the preparation of resistors.

20. Application of ceric sulphate according to one of Claims 1 to 3 as initiators for grafting monomers onto various polymers.

**Patentansprüche**

1. Cer(IV)-sulfat der allgemeinen Bruttoformel $Ce(SO_4)_2 \cdot xH_2SO_4 \cdot nH_2O$ (I), in der x und n grösser oder gleich 0 und kleiner oder gleich 1 sind, das eine Wasserlöslichkeit, angegeben als g/l Cer im vierwertigen Zustand, zwischen 150 und 385 g/l und eine wasserfreie $Ce(SO_4)_2$-Phase in seinem Röntgendiagramm aufweist.

2. Cersulfat nach Anspruch 1, dadurch gekennzeichnet, dass seine Wasserlöslichkeit, ausgedrückt als Gramm Cer im vierwertigen Zustand pro Liter, zwischen 180 und 385 g/l liegt.

3. Cersulfat nach Anspruch 1, dadurch gekennzeichnet, dass es der Formel (I) entspricht, in der x und n grösser oder gleich 0 und kleiner als 0,1 sind, und das es eine Wasserlöslichkeit, ausgedrückt in Gramm Cer im vierwertigen Zustand pro Liter, von wenigstens etwa 300 g/l besitzt.

4. Verfahren zur Herstellung des Cersulfats nach einem der Ansprüche 1 bis 3, dadurch gekennzeichnet, dass es aus wenigstens einer thermischen Behandlung eines hydratisierten Cersulfats der Formel $Ce(SO_4)_2 \cdot yH_2SO_4 \cdot zH_2O$ (II), in der y grösser als 0 und kleiner oder gleich 1,5 und z grösser oder gleich 2 ist, bei einer Temperatur zwischen 80 und 350°C besteht.

5. Verfahren nach Anspruch 4, dadurch gekennzeichnet, dass es aus den folgenden Stufen besteht:

a) in einer ersten Stufe stellt man Cer-IV-sulfat der Formel $Ce(SO_4)_2 \cdot yH_2SO_4 \cdot zH_2O$ (II), in der y grösser als 0 und kleiner oder gleich 1,5 und z grösser oder gleich 2 ist, durch Reaktion zwischen Cer(IV)-oxidhydrat und Schwefelsäure oder durch Elektrolyse von Cer(III)-sulfat oder durch Reaktion zwischen einem Cer(IV)-Salz und Schwefelsäure her,

b) in einer zweiten Stufe wird das in der ersten Stufe erhaltene Cer(IV)-Sulfat, gegebenenfalls nach Filtration, bei einer Temperatur zwischen 80 und 350°C thermisch behandelt.

6. Verfahren nach Anspruch 4 oder 5, dadurch gekennzeichnet, dass das hydratisierte Cer(IV)-sulfat der Formel $Ce(SO_4)_2 \cdot yH_2SO_4 \cdot zH_2O$ (II) entspricht, in der y grösser oder gleich 0,2 und kleiner oder gleich 0,7 und z grösser oder gleich 2 ist.

7. Verfahren nach Anspruch 5 oder 6, dadurch gekennzeichnet, dass man in der ersten Stufe das Cer(IV)-sulfat durch Reaktion zwischen dem Cer-(IV)-oxidhydrat und Schwefelsäure herstellt, nachdem das Cer(IV)-oxidhydrat zuvor bei einer Temperatur zwischen etwa 50 und 140°C getrocknet wurde, wobei die Schwefelsäure eine Konzentration von weniger als 20N besitzt, die Menge der Schwefelsäure einem Überschuss von 100 bis 200%, bezogen auf die Stöchiometrie, entspricht, und die Reaktion zwischen dem getrockneten Cer-(IV)-oxidhydrat und der Schwefelsäure bei einer Temperatur von unter 100°C durchgeführt wird.

8. Verfahren nach Anspruch 7, dadurch gekennzeichnet, dass der Cer(IV)-oxidhydrat zwischen 100 und 120°C getrocknet wird.

9. Verfahren nach Anspruch 7, dadurch gekennzeichnet, dass die Schwefelsäure eine Konzentration zwischen 15 und 18N besitzt.

10. Verfahren nach Anspruch 7, dadurch gekennzeichnet, dass die Reaktionstemperatur zwischen dem getrockneten Cer(IV)-oxidhydrat und der Schwefelsäure zwischen 60 und 100°C liegt.

11. Verfahren nach einem der Ansprüche 7 bis 10, dadurch gekennzeichnet, dass man die das Cer(IV)-sulfat der Formel (II) enthaltende Reaktionsmasse, die eine Temperatur zwischen Umgebungstemperatur und 95°C besitzt, filtriert.

12. Verfahren nach Anspruch 11, dadurch gekennzeichnet, dass die Temperatur der Reaktionsmasse zwischen 40 und 60°C liegt.

13. Verfahren nach einem der Ansprüche 3 bis 10, dadurch gekennzeichnet, dass man das hydratisierte Sulfat der Formel (II) einer thermischen Behandlung bei einer Temperatur zwischen 110 und 200°C während 10 bis 24 Stunden unterwirft.

14. Verfahren nach Anspruch 4 zur Herstellung des in Anspruch 3 definierten Cer(IV)-sulfats, dadurch gekennzeichnet, dass man das hydratisierte Cer(IV)-sulfat der Formel (II) einer ersten thermischen Behandlung bei einer Temperatur zwischen 80 und 130°C während 10 bis 48 Stunden unterwirft, wodurch man ein Cer-Sulfat der Formel $Ce(SO_4)_2, x'H_2SO_4, n'H_2O$ (III) erhält, in der x' grösser oder gleich 0,2 und kleiner oder gleich 0,7 und n' kleiner oder gleich 1 ist, und dass man anschliessend das Cer-Sulfat der Formel (III) einer zweiten thermischen Behandlung bei einer Temperatur zwischen 250 und 350°C während 4 bis 24 Stunden unterwirft.

15. Verwendung des Cer-Sulfats nach einem der Ansprüche 1 bis 3 zur Behandlung von Bleichromat- oder Titanoxidpigmenten zur Vermeidung des Dunkelfärbens durch ultraviolette Strahlung.

16. Verwendung des Cer-Sulfats nach einem der Ansprüche 1 bis 3 bei der Herstellung von Trockenmitteln für Anstriche.

17. Verwendung des Cer-Sulfats nach einem der Ansprüche 1 bis 3 bei der Herstellung von Katalysatoren.

18. Verwendung des Cer-Sulfats nach einem der Ansprüche 1 bis 3 zur Herstellung von Cersesquisulfiden.

19. Verwendung des Cer-Sulfats nach einem der Ansprüche 1 bis 3 zur Herstellung von Widerständen.

20. Verwendung des Cer-Sulfats nach einem der Ansprüche 1 bis 3 als Starter für das Aufpfropfen von Monomeren auf verschiedene Polymere.